(19) Europäisches Patentamt
European Patent Office
Office européen des brevets

(11) **EP 4 109 867 A1**

(12) **EUROPEAN PATENT APPLICATION**

(43) Date of publication:
**28.12.2022 Bulletin 2022/52**

(21) Application number: **22162291.3**

(22) Date of filing: **15.03.2022**

(51) International Patent Classification (IPC):
**H04N 1/00** (2006.01)

(52) Cooperative Patent Classification (CPC):
**H04N 1/00811; H04N 1/00482**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2021 IN 202141027756**

(71) Applicant: **Toshiba TEC Kabushiki Kaisha Tokyo 141-8562 (JP)**

(72) Inventor: **Srinivasan, Hariharasudhan Shinagawa-ku, Tokyo 141-8562 (JP)**

(74) Representative: **Bandpay & Greuter 30, rue Notre-Dame des Victoires 75002 Paris (FR)**

(54) **SYSTEM AND METHOD FOR SELECTIVELY SCANNING A PLURALITY OF PAGES FROM A DOCUMENT**

(57) Disclosed herein is a method and a scanning unit for selectively scanning a plurality of pages from a document. In an embodiment, the method comprises receiving a user input, comprising one of a page range or a page skip interval from a user. The user input indicates a plurality of pages to be scanned from the document. Further, the method comprises processing the user input to determine the plurality of pages of the document, which need to be selectively scanned from the document. In an embodiment, the present disclosure helps users in scanning only required pages from a document. As a result, the present disclosure enhances user experience and improves speed of scanning.

**100**

**FIG. 1**

**Description**

**Technical Field**

The present subject matter is, in general, related to Multi-Function Printers (MFPs), but not exclusively, to method and system for selectively scanning a plurality of pages from a document.

**Background**

Document scanning or imaging is a process of scanning paper documents into paperless digital files. Document scanning is an efficient approach for information management and minimizes use of physical papers for capturing and storing the information. Presently, there are numerous document scanning tools, such as Multi-Function Products (MFPs), paper document scanners and digital scanning applications/software, which convert the paper documents to digital documents and store them in an appropriate storage system.

However, the existing document scanning tools does not allow and/or support scanning only a required set of pages from a document. With the existing document scanning tools, a user needs to scan the complete paper document and then edit a scanned digital file of the document for deleting unwanted pages or retaining preferred pages from the digital file. Having to edit the digital file may become extremely tedious and inconvenient to the user when the document has a large number of pages or when the user is engaged in a time-critical task.

Therefore, it would be advantageous to have a mechanism that allows users to select only the required pages for scanning.

The information disclosed in this background of the disclosure section is only for enhancement of understanding of the general background of the invention and should not be taken as an acknowledgement or any form of suggestion that this information forms the prior art already known to a person skilled in the art.

**Summary**

Disclosed herein is a method according to claim 1 for selectively scanning a plurality of pages from a document. The method comprises receiving, by a scanning unit associated with a multi-function printer, a user input, comprising one of a page range or a page skip interval, indicating a plurality of pages to be scanned from the document. Further, the method comprises processing the user input for selectively scanning the plurality of pages from the document.

Further, the present invention relates to a scanning unit according to claim 8 for selectively scanning a plurality of pages from a document. The scanning unit comprises a processor and a memory. The memory is communicatively coupled to the processor and stores processor-executable instructions, which on execution, cause the processor to receive a user input, comprising one of a page range or a page skip interval, indicating a plurality of pages to be scanned from the document. Further, the instructions cause the processor to process the user input for selectively scanning the plurality of pages from the document.

The foregoing summary is illustrative only and is not intended to be in any way limiting. In addition to the illustrative aspects, embodiments, and features described above, further aspects, embodiments, and features will become apparent by reference to the drawings and the following detailed description.

**Brief Description of Drawings**

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and regarding the accompanying figures, in which:

**FIG. 1** shows an exemplary environment illustrating a method of selectively scanning a plurality of pages from a document in accordance with some embodiments of the present disclosure.

**FIG. 2** shows a detailed block diagram of a scanning unit in accordance with some embodiments of the present disclosure.

**FIG. 3A** and **FIG. 3B** show an exemplary User Interface (UI) for receiving a user input in accordance with some embodiments of the present disclosure.

**FIG. 3C** provides an exemplary illustration of selectively scanning pages of a document based on page range in accordance with some embodiments of the present disclosure.

**FIG. 3D** and **FIG. 3E** provide exemplary illustration of selectively scanning pages of a document based on page skip interval in accordance with some embodiments of the present disclosure.

**FIG. 4** shows a flowchart illustrating a method of selectively scanning a plurality of pages from a document in accordance with some embodiments of the present disclosure.

**FIG. 5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

**Detailed Description**

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the scope of the disclosure.

The terms "comprises", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and a scanning unit for facilitating selective scanning of a document on a document scanner and/or a Multi-Function Printer (MFP). In an embodiment, a user may be allowed to select the pages to be scanned by entering an appropriate user input to the scanning unit. As an example, the user may enter a page range or a page skip interval for selecting a required set of pages to be scanned from the document. In other words, the claimed invention allows users to perform a customized scan.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

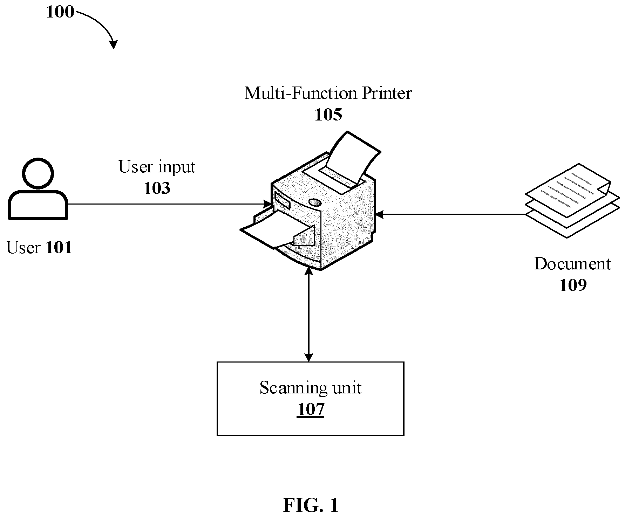

**FIG. 1** illustrates an exemplary environment **100** for selectively scanning a plurality of pages from a document **109** in accordance with some embodiments of the present disclosure.

In an embodiment, the environment **100** may include, without limiting to, a user **101,** a Multi-Function Printer (MFP) **105** and a scanning unit **107** associated with the MFP **105**. In an embodiment, the user **101** may be an operator of the MFP **105** and/or a person carrying a document **109** to be scanned at the MFP **105.** In an embodiment, the user **101** and the MFP **105** may be in the same physical location and the user **101** may access the MFP **105** directly. Alternatively, the user **101** may access the MFP **105** from a remote location using a suitable wired and/or wireless communication interface.

In an embodiment, the MFP **105** (also referred as Multi-Function Product, Multi-Function Peripheral or Multi-Function Device) may be any machine that incorporates multiple functionalities including, without limiting to, scanning a document **109,** photocopying a document **109,** printing a document **109** and the like. In an embodiment, the MFP **105** may be configured with a User Interface (not shown in FIG. 1) that allows the user **101** to enter a user input **103** to the MFP **105**. As an example, the UI may include, without limiting to, a display screen, a touchpad, a keypad and the like.

In an embodiment, the scanning unit **107** may be a computing unit that enables the MFP **105** to selectively scan a plurality of pages of the document **109** based on the user input **103** received from the user **101.** In an implementation, the scanning unit **107** may be a stand-alone computing unit that may be associated with the MFP **105** externally as an add-on/plugin device. In an alternative implementation, the scanning unit **107** may be configured within the MFP **105** as a functional module of the MFP **105.**

In an embodiment, the scanning unit **107** may display a notification and/or prompt message on the UI of the MFP **105,** indicating the user **101** to enter the user input **103.** In response, the user **101** may enter the user input **103,** which comprises a page range or a skip page interval to be considered while scanning the document **109.** As an example, the user may enter a page range. The page range may be a numeric range such as 1-10 or 15-18, which indicates that only pages 1 to 10 and 15 to 18 of the document **109** need to be scanned. Alternatively, the user may enter a skip page interval. The skip page interval may indicate a consecutive number of pages that need to be skipped from scanning. As an example, if the skip page interval is '3', then starting from the first page of the document **109,** only pages 1, 5, 9 ... and so on., may be scanned from the document **109.** In an embodiment, the user may choose either of the options from 'page range' or 'skip page interval' for selecting the pages to be scanned from the document **109.**

In an embodiment, the user **101** may be allowed to customize/modify the user input **103** as per requirement of the user **101.** When no user input **103** has been entered and/or when the user input **103** is an invalid value, then a 'default' scanning mode may be followed by the MFP **105.** As an example, the 'default' scanning mode may include scanning all the pages of the document **109.**

In an embodiment, after receiving the user input **103,** the scanning unit **107** may process the user input **103** to identify the plurality of pages selected by the user **101.** Subsequently, the scanning unit **107** may instruct the MFP **105** to scan only the plurality of pages selected by the user **101.** In an alternative implementation, the MFP **105** may scan all the pages of the document **109** and save a temporary copy of the scanned document. Subsequently, only the pages selected by the user **101** (i.e., the pages indicated in the user input **103**) may be retrieved from the temporary copy of the scanned document and returned as the final scanned document.

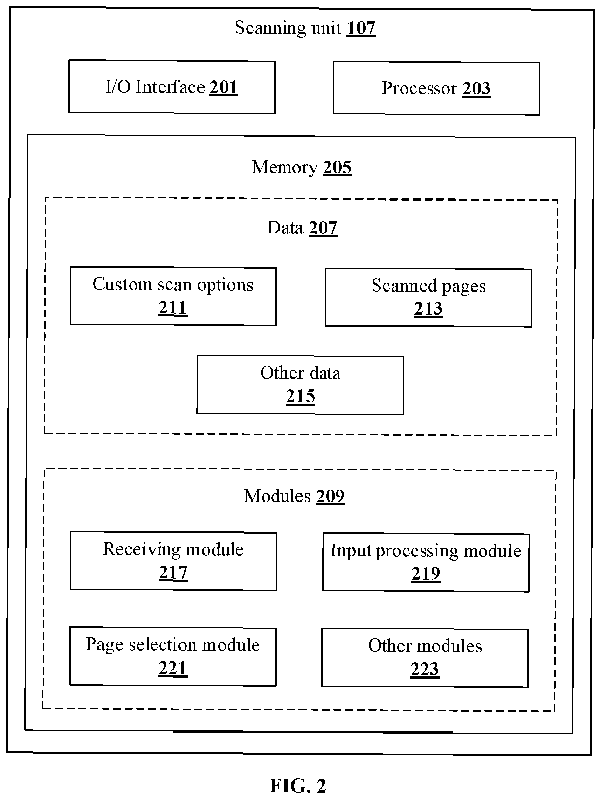

**FIG. 2** shows a detailed block diagram of a scanning unit **107** in accordance with some embodiments of the present disclosure.

In some implementations, the scanning unit **107** may include an I/O interface **201,** a processor **203** and a memory **205.** The I/O interface **201** may be used for communicatively interfacing the scanning unit **107** with a Multi-Function Printer (MFP) **105** that may be used for scanning the document **109.** Additionally, the I/O interface **201** may be used for communicatively interfacing the scanning unit **107** with a user device associated with a user **101,** for receiving a user input **103** from the user **101.** The memory **205** may be communicatively coupled to the processor **203** and may store data **207** and one or more modules **209.** The processor **203** may be configured to perform one or more functions of the scanning unit 107 for selectively scanning the plurality of pages from the document **109,** using the data **207** and the one or more modules **209.**

In an embodiment, the data **207** stored in the memory **205** may include, without limitation, custom scan options **211,** scanned pages **213** and other data **215.** In some implementations, the data **207** may be stored within the memory **205** in the form of various data structures. Additionally, the data **207** may be organized using data models, such as relational or hierarchical data models. The other data **215** may include various temporary data and files generated by the one or more modules **209** while performing various functions of the scanning unit **107.** As an example, the other data **215** may include, without limitation, temporarily stored user input **103** and buffers generated while scanning the document **109.**

In an embodiment, the custom scan options **211** may be the scan options provided to the user **101,** for allowing the user **101** to select the plurality of pages to be scanned from the document **109.** In an embodiment, the custom scan options **211** may be provided on the UI of the MFP **105.** As an example, the custom scan options **211** may include, without limiting to, a page range scanning option, a skip interval scanning option and a default scanning option. One of the custom scan options **211** selected by the user **101** may be received as the user input **103.**

In an embodiment, scanned pages **213** may be the plurality of pages that are scanned from the document **109** based on the user input **103.** In an embodiment, the scanned pages **213** may be temporarily stored on the scanning unit **107** before creating a digital file. Additionally, a 'preview' of the plurality of pages selected by the user **101** may be provided on the UI of the MFP **105,** before creating the digital file of the scanned pages **213.** Subsequently, the user **101** may be allowed to review the 'preview' and modify the user input **103** if there are any changes in the already scanned pages **213.**

In an embodiment, the data **207** may be processed by the one or more modules **209** of the scanning unit **107.** In some implementations, the one or more modules **209** may be communicatively coupled to the processor **203** for performing one or more functions of the scanning unit **107.** In an implementation, the one or more modules **209** may include, without limiting to, a receiving module **217,** an input processing module **219,** a page selection module **221** and other modules **223.**

As used herein, the term module may refer to an Application Specific Integrated Circuit (ASIC), an electronic circuit, a hardware processor (shared, dedicated, or group) and memory that execute one or more software or firmware programs, a combinational logic circuit, and/or other suitable components that provide the described functionality. In an implementation, each of the one or more modules **209** may be configured as stand-alone hardware computing units. In an embodiment, the other modules **223** may be used to perform various miscellaneous functionalities of the scanning unit **107.** It will be appreciated that such one or more modules **209** may be represented as a single module or a combination of different modules.

In an embodiment, the receiving module **217** may be configured for receiving the user input **103** and other commands from the user **101,** through the UI of the MFP **105.** In an embodiment, the input processing module **219** may be configured for processing the user input **103** received from the user **101.** Here, the input processing module **219** may decode the user input **103** and identify the pages selected by the user **101.** Further, the page selection module **221** may be configured for selecting and/or retrieving only the pages selected by the user from the temporary copy of the scanned document.

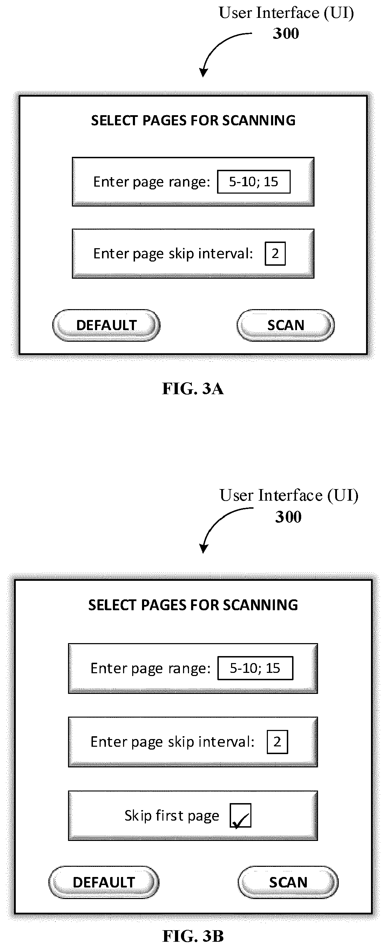

**FIG. 3A** shows an exemplary UI **300** that may be used for receiving the user input **103** from the user **101.** In an embodiment, the UI **300** may comprise three options for assisting the user **101** in entering the required user input **103.** As an example, the UI **300** may provide an option to 'Enter page range', 'Enter page skip interval' or an option to choose 'Default' scanning mode of the MFP **105.**

Suppose, if the user **101** intends to scan only a specific range of pages, say pages 5-10 and 15 of the document **109,** then the user **101** may specify the required range on the textbox provided next to the 'Enter page range' option. Similarly, if the user **101** intends to skip certain pages from being scanned at a regular interval, then the user **101** may specify the required page skip interval on the textbox next to the option 'Enter page skip interval'. As an example, if the user **101** chooses '2' as the page skip interval, then only those pages that are in multiples of 3 may be selected for scanning. In other words, if a document **109** has 20 pages, then a page skip interval of '2' ensures that only the pages 3, 6, 9, 12, 15 and 18 are scanned and the pages 1, 2, 4, 5, 7, 8, 10, 11, 13, 14, 16, 17, 19 and 20 are skipped from scanning.

In an embodiment, the scanning unit **107** may be configured to skip the pages including or excluding the 'first' page of the document **109.** That is, when the skipping starts from the 'first' page of the document **109,** even the 'first' page of the document **109** may skipped and/or excluded from scanning, causing only the pages 3, 6, 9, 12, 15 and 18 to be scanned from the document **109.** Alternatively, when the 'first' page is excluded from the 'page skip interval', then the pages 1, 4, 7, 10, 13, 16 and 19 may be scanned from the document **109.** As a default configuration, the scanning unit **107** may be configured to calculate the page skip interval including the 'first' page of the document **109.** In an embodiment, the user **101** may be allowed to override the default configuration by checking/selecting the 'Skip first page' option provided on the **UI 300,** as shown in **FIG. 3B.**

In an embodiment, once the user **101** has entered the required user input **103** (i.e., page range or page skip interval), the user **101** may click on the 'SCAN' button presented on the UI **300** to initiate scanning of the document **109.** In an embodiment, when the user **101** does not have a specific set/range of pages to be scanned and also does not wish to skip any pages from scanning, the user **101** may choose a default scanning mode of the MFP **105** by clicking the 'DEFAULT' button on the UI **300.**

In an embodiment, after receiving and processing the user input **103** received from the user **101,** the scanning unit **107** may optionally provide a scanned 'preview' of the selected pages to the user **101.** The user **101** may review the preview and confirm the scanning. On the other hand, when the user **101** prefers to make any changes in the set of documents selected for scanning, the user **101** may be allowed to change the user input **103** using the options available on the UI **300.**

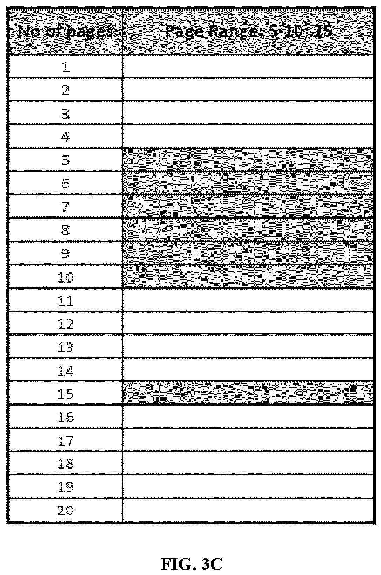

**FIG. 3C** illustrates selection of pages from the document **109** when a page range has been received as the user input **103.** As an example, if there are 20 pages in the document **109** and the selected page range is 5-10 and 15, then the scanning unit **107** may scan the whole document and select only the pages 5-10 and 15 for returning as the final scan output to the user. These selected pages are indicated as highlighted boxes in **FIG. 3C.**

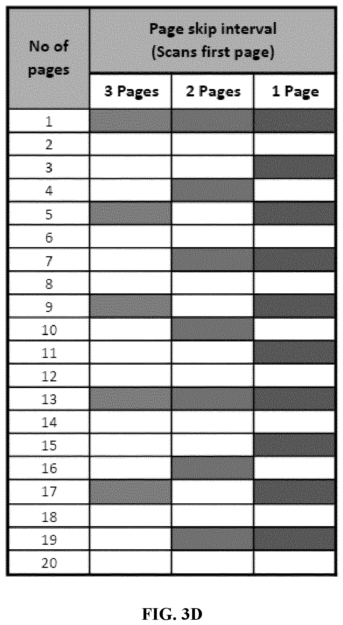

**FIG. 3D** illustrates selection of pages for different values of 'page skip interval' such as 3, 2 and 1. As an example, if there are 20 pages in the document **109** and the 'page skip interval' selected by the user is '3', then the pages 1, 5, 9, 13 and 17 may be selected for scanning. Similarly, when the 'page skip interval' is 2, only the pages 1, 4, 7, 10, 13, 16 and 19 may be selected for scanning. Similarly, when the selected 'page skip interval' is 1, only the alternative pages of the document **109** may be selected for scanning. That is, the pages 1, 3, 5, 7, 9, 11, 13, 15, 17 and 19 may be selected for scanning. Here, the page to be selected for scanning may be identified using the expression (1) given below:

$$\text{Next page to be scanned} = \text{Last page scanned} + (\text{Page skip interval} + 1) \qquad \dots (1)$$

Wherein, at the beginning of the scanning, the variable 'last page scanned' may be set to '1' when the 'page skip interval' includes the 'first' page of the document **109.**

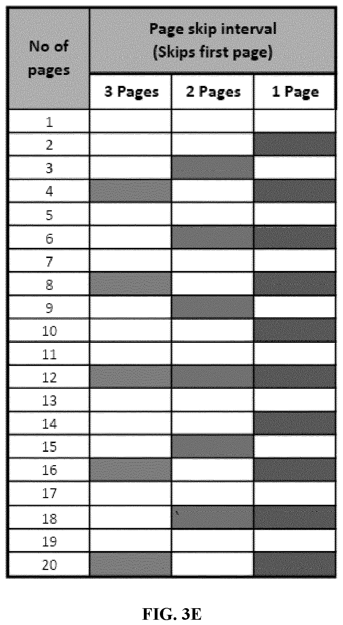

**FIG. 3E** illustrates selection of pages when the user **101** has selected the 'Skip first page' option on the UI **300.**

In this scenario, as an example, when the 'page skip interval is selected as '3', only the pages 4, 8, 12, 16 and 20 may be selected for the scanning. Here, the variable 'last page scanned' of expression (1) may be set to '0', indicating that the 'first' page of the document **109** needs to be skipped from scanning.

In an embodiment, the scanning unit **107** may be configured in such a way that it causes the MFP **105** to skip the pages, that are not selected by the user, without actually capturing images of those pages. This ensures better performance and faster scanning of the MFP **105**. Further, the scanning unit **107** may be configured to stop the scanning once the page range and/or the page skip interval entered by the user **101** is completed.

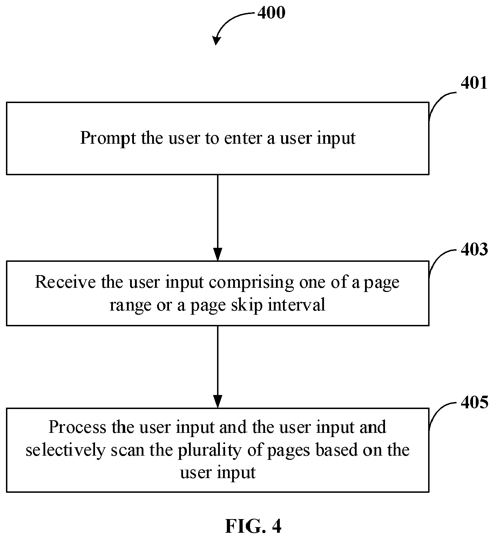

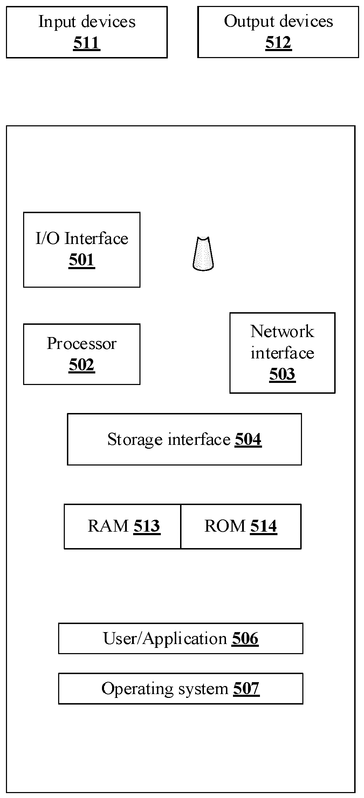

**FIG. 4** shows a flowchart illustrating method of selectively scanning a plurality of pages from a document **109** in accordance with some embodiments of the present disclosure.

As illustrated in **FIG. 4,** the method **400** may include one or more blocks illustrating a method for selectively scanning pages from a document **109** using a scanning unit **107** illustrated in **FIG. 1**. The method **400** may be described in the general context of computer executable instructions. Generally, computer executable instructions can include routines, programs, objects, components, data structures, procedures, modules, and functions, which perform specific functions or implement specific abstract data types.

The order in which the method **400** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **401,** the method **400** includes prompting, by the scanning unit **107**, a user **101** of the scanning unit **107** and/or a Multi-Function Printer (MFP) **105** associated with the scanning unit **107** to enter a user input **103**. The user input **103** may be a numeric value that indicates a set of pages that need to be scanned from a document **109**. In an embodiment, the user input **103** may be received through a User Interface (UI) **300** associated with the scanning unit **107**. An exemplary UI **300** for receiving the user input **103** has been illustrated in **FIG. 3A.**

At block **403,** the method **400** includes receiving, by the scanning unit **107,** the user input **103** comprising one of a page range or a page skip interval, which indicates the plurality of pages to be scanned from the document **109**. As an example, the page range may indicate one or more groups of pages to be selected from the document **109** for scanning. Similarly, the page skip interval may indicate a plurality of pages to be selected for scanning in multiples of the page skip interval. In an embodiment, the page skip interval may be calculated starting from a first page of the document **109,** as illustrated in **FIG. 3C.**

At block **405,** the method **400** includes processing, by the scanning unit **107,** the user input **103** for selectively scanning the plurality of pages from the document **109**. In an embodiment, processing the user input **103** may include steps of scanning and storing the plurality of pages that are selected based on the user input **103** in a predetermined document format. As an example, the predetermined document format may be one of, without limiting to, '.pdf, '.jpeg' or '.jpg'.

In an embodiment, the scanning unit **107** may follow a default scanning procedure when there is no user input **103** available. That is, the scanning unit **107** may scan each page of the document **109** when the user input **103** is not received or when a default scanning option is selected by the user **101.**

Computer System

**FIG. 5** illustrates a block diagram of an exemplary computer system **500** for implementing embodiments consistent with the present disclosure. In an embodiment, the computer system **500** may be the scanning unit **107** illustrated in **FIG. 1,** which may be used for selectively scanning a plurality of pages from a document **109**. In an alternative embodiment, the computer system may be the Multi-Function Printer (MFP) **105** used for scanning the document **109**. The computer system **500** may include a central processing unit ("CPU" or "processor") **502**. The processor **502** may comprise at least one data processor for executing program components for executing user- or system-generated business processes. A user may include any person, application or tool that directly or indirectly operates the computer system **500**. The processor **502** may include specialized processing units such as integrated system (bus) controllers, memory management control units, floating point units, graphics processing units, digital signal processing units, etc.

The processor **502** may be disposed in communication with one or more Input/Output (I/O) devices **(511** and **512)** via I/O interface **501**. The I/O interface **501** may employ communication protocols/methods such as, without limitation, audio, analog, digital, stereo, IEEE®-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE® 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc. Using the I/O interface **501,** the computer system **500** may communicate with one or more I/O devices **511** and **512**.

In some embodiments, the processor **502** may be disposed in communication with a communication network **509** via a network interface **503.** The network interface **503** may communicate with the communication network **509.** The network interface **503** may employ connection protocols including, without limitation, direct connect, Ethernet (e.g., twisted pair 10/100/1000 Base T), Transmission Control Protocol/Internet Protocol (TCP/IP), token ring, IEEE® 802.11a/b/g/n/x, etc. Using the network interface **503** and the communication network **509,** the computer system **500** may connect with the MFP **105** and/or any other computing device associated with the user **101.**

In an implementation, the communication network **509** may be implemented as one of the several types of networks, such as intranet or Local Area Network (LAN) and such within the organization. The communication network **509** may either be a dedicated network or a shared network, which represents an association of several types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **509** may include a variety of network devices, including routers, bridges, servers, computing devices, storage devices, etc.

In some embodiments, the processor **502** may be disposed in communication with a memory **505** (e.g., RAM **513,** ROM **514,** etc. as shown in **FIG. 5)** via a storage interface **504.** The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user/application interface **506,** an operating system **507,** a web browser **508,** and the like. In some embodiments, computer system **500** may store user/application data **506,** such as the data, variables, records, etc. as described in this invention. Such databases may be implemented as fault-tolerant, relational, scalable, secure databases such as Oracle® or Sybase®.

The operating system **507** may facilitate resource management and operation of the computer system **500.** Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM® OS/2®, MICROSOFT® WINDOWS® (XP®, VISTA®/7/8, 10 etc.), APPLE® IOS®, GOOGLE ™ ANDROID ™, BLACKBERRY® OS, or the like.

The user interface **506** may facilitate display, execution, interaction, manipulation, or operation of program components through textual or graphical facilities. For example, the user interface **506** may provide computer interaction interface elements on a display system operatively connected to the computer system **500,** such as cursors, icons, check boxes, menus, scrollers, windows, widgets, and the like. Further, Graphical User Interfaces (GUIs) may be employed, including, without limitation, APPLE® MACINTOSH® operating systems' Aqua®, IBM® OS/2®, MICROSOFT® WINDOWS® (e.g., Aero, Metro, etc.), web interface libraries (e.g., ActiveX®, JAVA®, JAVASCRIPT® AJAX, HTML, ADOBE® FLASH®, etc.), or the like.

The web browser **508** may be a hypertext viewing application. Secure web browsing may be provided using Secure Hypertext Transport Protocol (HTTPS), Secure Sockets Layer (SSL), Transport Layer Security (TLS), and the like. The web browsers **508** may utilize facilities such as AJAX, DHTML, ADOBE® FLASH®, JAVASCRIPT®, JAVA®, Application Programming Interfaces (APIs), and the like. Further, the computer system **500** may implement a mail server stored program component. The mail server may utilize facilities such as ASP, ACTIVEX®, ANSI® C++/C#, MICROSOFT®, NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT® exchange, Post Office Protocol (POP), Simple Mail Transfer Protocol (SMTP), or the like. In some embodiments, the computer system **500** may implement a mail client stored program component. The mail client may be a mail viewing application, such as APPLE® MAIL, MICROSOFT® ENTOURAGE®, MICROSOFT® OUTLOOK®, MOZILLA® THUNDERBIRD®, and the like.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Advantages of the embodiments of the present disclosure are illustrated herein.

In an embodiment, the present disclosure provides a method for selecting a plurality of pages to be scanned from a document. For example, if a document comprises 100 pages and the user prefers to select only pages 3-5 and 11-14 for scanning, then a traditional scanner may scan each of the 100 pages of the document. Whereas, according to the present disclosure, the scanner may need to scan only pages 1-14, since the user has preferred to skip rest of the pages beyond 14 (i.e., pages 15-100) from scanning. In other words, the present disclosure ensures that the scanner needs to scan a document only until a user-defined limit has been reached (in the above example, user-defined limit is 14). Consequently, the present disclosure makes optimal use of processing and memory resources associated with the scanner.

In an embodiment, the present disclosure enhances speed of scanning a document since the user can skip and/or avoid scanning of all the pages in the document. The present disclosure is extremely useful when there are multiple pages to be scanned from multiple documents.

In an embodiment, the method of present disclosure improves user convenience and enhances user experience with the scanning, by ensuring that the user need not edit the scanned document after the scanning is complete.

In light of the technical advancements provided by the disclosed method and the scanning unit, the claimed steps, as discussed above, are not routine, conventional, or well-known aspects in the art, as the claimed steps provide the aforesaid solutions to the technical problems existing in the conventional technologies. Further, the claimed steps clearly bring an improvement in the functioning of the MFPs and/or other document scanners, as the claimed steps provide a technical solution to a technical problem.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device/article is described herein (whether they cooperate), it will be clear that a single device/article may be used in place of the more than one device/article or a different number of devices/articles may be used instead of the shown number of devices or programs. The functionality and/or features of a device may be alternatively embodied by one or more other devices which are not explicitly described as having such functionality/features. Thus, other embodiments of invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral Numerals:**

| Reference Number | Description |
| --- | --- |
| 100 | Environment |
| 101 | User |
| 103 | User input |
| 105 | Multi-Function Printer (MFP) |
| 107 | Scanning unit |
| 109 | Document |

(continued)

| Reference Number | Description |
| --- | --- |
| 201 | I/O Interface |
| 203 | Processor |
| 205 | Memory |
| 207 | Data |
| 209 | Modules |
| 211 | Custom scan options |
| 213 | Scanned pages |
| 215 | Other data |
| 217 | Receiving module |
| 219 | Input processing module |
| 221 | Page selection module |
| 223 | Other modules |
| 300 | User Interface (UI) |
| 500 | Exemplary computer system |
| 501 | I/O Interface of the exemplary computer system |
| 502 | Processor of the exemplary computer system |
| 503 | Network interface |
| 504 | Storage interface |
| 505 | Memory of the exemplary computer system |
| 506 | User/Application |
| 507 | Operating system |
| 508 | Web browser |
| 509 | Communication network |
| 511 | Input devices |
| 512 | Output devices |
| 513 | RAM |
| 514 | ROM |

## Claims

1.  A method for selectively scanning a plurality of pages from a document, the method comprising:

    receiving, by a scanning unit (107) associated with a Multi-Function Printer (MFP)(105), a user input (103), comprising one of a page range or a page skip interval, indicating a plurality of pages to be scanned from the document; and
    processing, by the scanning unit, the user input for selectively scanning the plurality of pages from the document.

2.  The method as claimed in claim 1, wherein receiving the user input comprises:

    displaying one or more custom scan options, comprising at least one of a page range scanning option, a skip interval scanning option and a default scanning option, to a user, on a User Interface (UI) associated with the multi-function printer; and

receiving the user input for the one of the one or more custom scan options through the UI.

3. The method as claimed in claim 1 or 2, wherein the page range indicates one or more groups of consecutive pages to be selected from the document for scanning.

4. The method as claimed in any one of claims 1 to 3, wherein the page skip interval indicates a plurality of pages to be selected for scanning in multiples of the page skip interval.

5. The method as claimed in claim 4, wherein the page skip interval is calculated starting from a first page of the document, either including the first page or excluding the first page.

6. The method as claimed in any one of claims 1 to 5 comprises scanning each page of the document when the user input is not received or when a default scanning option is selected by a user.

7. The method as claimed in any one of claims 1 to 6, wherein processing the user input comprises scanning and storing the plurality of pages selected based on the user input in a predetermined document format.

8. A scanning unit for selectively scanning a plurality of pages from a document, the scanning unit comprising:

a processor (502); and
a memory (505), communicatively coupled to the processor, wherein the memory stores processor-executable instructions, which on execution, cause the processor to:

receive a user input, comprising one of a page range or a page skip interval, indicating a plurality of pages to be scanned from the document; and
process the user input for selectively scanning the plurality of pages from the document.

9. The scanning unit as claimed in claim 8, wherein to receive the user input, the processor is configured to:

display one or more custom scan options, comprising at least one of a page range scanning option, a skip interval scanning option and a default scanning option, to a user, on a User Interface (UI) associated with the multi-function printer; and
receive the user input for the one of the one or more custom scan options through the UI.

10. The scanning unit as claimed in claim 8 or 9, wherein the page range indicates one or more groups of consecutive pages to be selected from the document for scanning.

11. The scanning unit as claimed in any one of claims 8 to 10, wherein the page skip interval indicates a plurality of pages to be selected for scanning in multiples of the page skip interval.

12. The scanning unit as claimed in claim 11, wherein the processor calculates the page skip interval starting from a first page of the document, either including the first page or excluding the first page.

13. The scanning unit as claimed in any one of claims 8 to 12, wherein the processor is configured to scan each page of the document when the user input is not received or when a default scanning option is selected by a user.

14. The scanning unit as claimed in any one of claims 8 to 13, wherein the processor processes the user input by scanning and storing the plurality of pages selected based on the user input in a predetermined document format.

100

Multi-Function Printer
**105**

User input
**103**

User **101**

Document
**109**

Scanning unit
**107**

**FIG. 1**

Scanning unit **107**

I/O Interface **201**

Processor **203**

Memory **205**

Data **207**

Custom scan options
**211**

Scanned pages
**213**

Other data
**215**

Modules **209**

Receiving module
**217**

Input processing module
**219**

Page selection module
**221**

Other modules
**223**

**FIG. 2**

User Interface (UI)

**300**

SELECT PAGES FOR SCANNING

Enter page range:  5-10; 15

Enter page skip interval:  2

DEFAULT          SCAN

**FIG. 3A**

User Interface (UI)

**300**

SELECT PAGES FOR SCANNING

Enter page range:  5-10; 15

Enter page skip interval:  2

Skip first page  ☑

DEFAULT          SCAN

**FIG. 3B**

| No of pages | Page Range: 5-10; 15 |
|:---:|:---|
| 1 | |
| 2 | |
| 3 | |
| 4 | |
| 5 | |
| 6 | |
| 7 | |
| 8 | |
| 9 | |
| 10 | |
| 11 | |
| 12 | |
| 13 | |
| 14 | |
| 15 | |
| 16 | |
| 17 | |
| 18 | |
| 19 | |
| 20 | |

**FIG. 3C**

| No of pages | Page skip interval (Scans first page) | | |
|:---:|:---:|:---:|:---:|
| | 3 Pages | 2 Pages | 1 Page |
| 1 | ■ | ■ | ■ |
| 2 | | | |
| 3 | | | ■ |
| 4 | | ■ | |
| 5 | ■ | | ■ |
| 6 | | | |
| 7 | | ■ | ■ |
| 8 | | | |
| 9 | ■ | | ■ |
| 10 | | ■ | |
| 11 | | | ■ |
| 12 | | | |
| 13 | ■ | ■ | ■ |
| 14 | | | |
| 15 | | | ■ |
| 16 | | ■ | |
| 17 | ■ | | ■ |
| 18 | | | |
| 19 | | ■ | ■ |
| 20 | | | |

FIG. 3D

| No of pages | Page skip interval (Skips first page) | | |
|---|---|---|---|
| | 3 Pages | 2 Pages | 1 Page |
| 1 | | | |
| 2 | | | ▓ |
| 3 | | ▓ | |
| 4 | ▓ | | ▓ |
| 5 | | | |
| 6 | | ▓ | ▓ |
| 7 | | | |
| 8 | ▓ | | ▓ |
| 9 | | ▓ | |
| 10 | | | ▓ |
| 11 | | | |
| 12 | ▓ | ▓ | ▓ |
| 13 | | | |
| 14 | | | ▓ |
| 15 | | ▓ | |
| 16 | ▓ | | ▓ |
| 17 | | | |
| 18 | | ▓ | ▓ |
| 19 | | | |
| 20 | ▓ | | ▓ |

**FIG. 3E**

400

401

Prompt the user to enter a user input

403

Receive the user input comprising one of a page range or a page skip interval

405

Process the user input and the user input and selectively scan the plurality of pages based on the user input

FIG. 4

| Input devices 511 | Output devices 512 |
|---|---|

I/O Interface
**501**

Processor
**502**

Network interface
**503**

Storage interface **504**

| RAM **513** | ROM **514** |
|---|---|

User/Application **506**

Operating system **507**

Europäisches
Patentamt

European
Patent Office

Office européen
des brevets

# EUROPEAN SEARCH REPORT

**Application Number**

EP 22 16 2291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2005 303901 A (SHARP KK) 27 October 2005 (2005-10-27) * abstract * * figures 1-11 * * pages 5-7 * * pages 11-13 * * page 18 * ----- | 1-14 | INV. H04N1/00 |
| X | US 5 640 647 A (HUBE RANDALL R [US]) 17 June 1997 (1997-06-17) * abstract * * figures 1-3 * * columns 1-2 * ----- | 1-14 | |

**TECHNICAL FIELDS SEARCHED (IPC)**

H04N

The present search report has been drawn up for all claims

| Place of search | Date of completion of the search | Examiner |
|---|---|---|
| The Hague | 25 August 2022 | Visser, Michelle L. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 2291

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2022

| Patent document cited in search report | | Publication date | Patent family member(s) | Publication date |
|---|---|---|---|---|
| JP 2005303901 | A | 27-10-2005 | NONE | |
| US 5640647 | A | 17-06-1997 | NONE | |

EPO FORM P0459

For more details about this annex : see Official Journal of the European Patent Office, No. 12/82